# EUROPEAN PATENT APPLICATION

(11) **EP 4 700 571 A1**
(43) Date of publication of application: **25.02.2026**
(21) Application number: 24791914.5
(22) Date of filing: 11.04.2024
(51) Int. Cl.: G06F 9/4401

(54) **HIBERNATION METHOD AND RELATED DEVICE THEREOF**

(30) Priority: 18.04.2023 CN 202310422540
(71) Applicant: Cloud Intelligence Assets Holding (Singapore) Private Limited, Singapore 189554 (SG)
(72) Inventor: ZHANG, Xiantao, Hangzhou, Zhejiang 310030 (CN); REN, Jinkui, Shanghai 200120 (CN); YU, Chuwu, Hangzhou, Zhejiang 310030 (CN); YANG, Xingfei, Beijing 100102 (CN); WANG, Wenduo, Hangzhou, Zhejiang 310030 (CN); LI, Yifei, Beijing 100102 (CN); TENG, Shengbo, Beijing 100102 (CN); WEN, Gan, Beijing 100102 (CN)
(74) Representative: Barker Brettell LLP
(86) International application number: PCT/CN2024/087278
(87) International publication number: WO 2024/217329

(57) **Abstract**

This application relates to a hibernation method and a related device thereof. The method includes: determining, when running of a to-be-hibernated virtual machine is stopped by a first virtual machine monitor of a first target server in which the to-be-hibernated virtual machine is located, a memory page used for storing running data of the to-be-hibernated virtual machine in memory of the to-be-hibernated virtual machine in the first target server; and transferring the running data to a predetermined storage object after the running data stored in the memory page is compressed by the first virtual machine monitor, so that when the to-be-hibernated virtual machine is woken up, the woken to-be-hibernated virtual machine inherits, by using the running data read from the storage object, a running state that is before the running of the to-be-hibernated virtual machine is stopped. According to this application, problems that hibernation of a virtual machine depends on a capability of an operating system of the virtual machine, resulting in hibernation failure and a long hibernation delay are resolved.

## Description

This application claims priority to Chinese Patent Application No. 202310422540.8, filed with the China National Intellectual Property Administration on April 18, 2023, and entitled "HIBERNATION METHOD AND RELATED DEVICE THEREOF", which is incorporated herein by reference in its entirety.

### TECHNICAL FIELD

This application relates to the field of computer technologies, and in particular, to a hibernation method and a related device thereof.

### BACKGROUND

This section is intended to provide a background or context for embodiments of this application set forth in the claims. Descriptions in this section should not be construed as existing technologies.

Due to characteristics of services or usage habits of users, use of cloud virtual machines may not be temporally consecutive. In idle resource periods, users expect to release virtual machines. When a service needs to be run, the user expects to quickly create a virtual machine to start the service. From the perspective of users, on-demand use of virtual machines can greatly reduce costs. From the perspective of cloud service providers, different tenants can use computing resources through time-division multiplexing, thereby improving resource utilization.

Currently, virtual machine hibernation is a method for releasing bottom-layer resources on demand while preserving the computing state. A hibernation operation of a conventional computer system has been standardized into an advanced configuration and power management interface (ACPI), and a G1/S4 state is defined in the ACPI specification as "Suspend-to-Disk". That is, before hibernation, an operating system persists information in memory or a peripheral to a magnetic disk, and reloads the information to initialize the memory or the peripheral before wakeup. Therefore, the state of the computer system before and after hibernation can be preserved. In a virtual machine scenario, hibernation based on this capability is still supported. However, when a virtual machine is hibernated based on this capability, the hibernation may fail. Another hibernation solution is hibernation based on a virtual machine monitor Hypervisor, i.e., in a hibernation stage, the Hypervisor stops the virtual machine. However, currently, hibernation based on the virtual machine monitor Hypervisor has a long hibernation delay.

### SUMMARY

A hibernation method and a related device thereof provided in embodiments of this application at least resolve a problem of a long hibernation delay of a virtual machine.

According to an aspect of this application, a hibernation method is provided, including:
determining, when running of a to-be-hibernated virtual machine is stopped by a first virtual machine monitor of a first target server in which the to-be-hibernated virtual machine is located, a memory page used for storing running data of the to-be-hibernated virtual machine in memory of the to-be-hibernated virtual machine in the first target server; and
transferring the running data to a predetermined storage object after the running data stored in the memory page is compressed by the first virtual machine monitor, so that when the to-be-hibernated virtual machine is woken up, the woken to-be-hibernated virtual machine inherits, by using the running data read from the storage object, a running state that is before the running of the to-be-hibernated virtual machine is stopped.

Beneficial effects of the embodiments of this application are as follows.

According to the hibernation method provided in the embodiments of this application, in a process in which a virtual machine monitor stops scheduling a virtual processor of a to-be-hibernated virtual machine to a physical processor of a first target server for running, to stop running the to-be-hibernated virtual machine, a memory page used for storing running data of the to-be-hibernated virtual machine in memory in the first target server is determined, and the running data stored in the memory page is compressed and then stored into a storage object by the virtual machine monitor, thereby reducing read and write pressure of the storage object, and further reducing a hibernation delay and a wakeup delay and improving hibernation performance.

Details of one or more embodiments of this application are provided in the accompanying drawings and descriptions below to make other features, objects, and advantages of this application more readily apparent.

### BRIEF DESCRIPTION OF DRAWINGS

In the drawings, unless otherwise specified, the same reference numerals refer to the same or similar parts or elements throughout a plurality of drawings. The drawings are not necessarily drawn to scale. It should be understood that these accompanying drawings only depict some implementations disclosed in this application and should not be considered as limiting the scope of this application.
FIG. 1 is a schematic flowchart of a hibernation method according to an embodiment of this application.
FIG. 2 is a schematic flowchart of creation of a target virtual machine according to an embodiment of this application.
FIG. 3 is a schematic flowchart of selection of a second target server according to an embodiment of this application.
FIG. 4 is a schematic flowchart of selection of a second target server according to an embodiment of this application.
FIG. 5 is a schematic diagram of a hibernation system according to an embodiment of this application.
FIG. 6 is a schematic diagram of reducing a delay based on a low load server according to an embodiment of this application.
FIG. 7 is a schematic diagram of configuring a to-be-hibernated virtual machine of an original specification to a to-be-hibernated virtual machine of a target specification for wakeup according to an embodiment of this application.
FIG. 8 is a schematic diagram of performing parallel transmission of running data between a Hypervisor and a storage object according to an embodiment of this application.

In the accompanying drawings,
11: cloud management and control platform; 12: storage object; and 13: inventory service.

### DESCRIPTION OF EMBODIMENTS

Embodiments of this embodiment are described in detail below with reference to the accompanying drawings. Although some embodiments of this application are shown in the accompanying drawings, it should be understood that this application may be implemented in various forms and should not be construed as being limited to the embodiments described herein, but these embodiments are provided for a more thorough and complete understanding of this application. It should be understood that the accompanying drawings and the embodiments of this application are merely intended for exemplary purposes, and are not intended to limit the protection scope of this application.

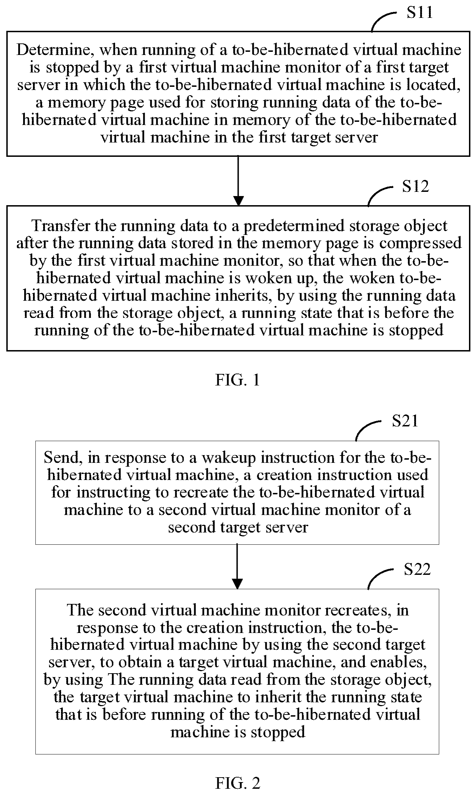

Since an existing virtual machine wakeup manner relying on a wakeup capability of an operating system of a virtual machine may cause problems of fail hibernation and a long hibernation delay, the first embodiment of this application provides a hibernation method. As shown in FIG. 1, the method includes the following steps:

Step S11: determine, when running of a to-be-hibernated virtual machine is stopped by a first virtual machine monitor of a first target server in which the to-be-hibernated virtual machine is located, a memory page used for storing running data of the to-be-hibernated virtual machine in memory of the to-be-hibernated virtual machine in the first target server. The virtual machine monitor (VMM) Hypervisor is specifically configured to create and execute software, firmware, or hardware of a virtual machine (VM). The Hypervisor is a core of virtual machine technology, which is a layer of code located between an operating system and computer hardware and is configured to segment a hardware platform into a plurality of virtual machines. The Hypervisor runs in a privileged mode, and has a main function of isolating and managing a plurality of virtual machines running at an upper layer, arbitrating access of the virtual machines to hardware at a bottom layer, and virtualizing, for each client operating system, a set of virtual hardware environments (including a physical processor, memory, and an I/O read/write device) independent of actual hardware. The Hypervisor shares a physical processor (CPU) between virtual machines by using a scheduling algorithm, for example, a round robin scheduling algorithm. In general, the Hypervisor is a virtualization management component, and allows a plurality of user operating systems to share a same physical host (server). Life cycle management may be performed on the virtual machine by using the Hypervisor, for example, creating, suspending, and releasing a virtual machine. In this embodiment of this application, after a hibernation instruction performed by a user on a to-be-hibernated virtual machine is received, a virtual machine monitor constructing the to-be-hibernated virtual machine is first determined, and in a subsequent hibernation process, running of the corresponding to-be-hibernated virtual machine is stopped by the virtual machine monitor.

Step S12: transfer the running data to a predetermined storage object 12 after the running data stored in the memory page is compressed by the first virtual machine monitor, so that when the to-be-hibernated virtual machine is woken up, the woken to-be-hibernated virtual machine inherits, by using the running data read from the storage object 12, a running state that is before the running of the to-be-hibernated virtual machine is stopped. The storage object in this embodiment of this application includes a memory, an object storage service, a file storage service, a cloud disk service, and the like, and a needed storage object may be selected according to an actual requirement.

Specifically, for the memory page that is in the memory of the first target server and is used for storing the running data, the virtual machine usually does not consume all memory pages in memory occupied by the to-be-hibernated virtual machine on the first target server. Therefore, when hibernation is performed, before the running data is compressed, a valid memory page actually occupied may be exported from the to-be-hibernated virtual machine. The Hypervisor compresses and persistently stores only running data stored in the valid memory page. According to a method for exporting a valid memory page, a device (for example, a virtio balloon) may be created in the to-be-hibernated virtual machine. The valid memory page actually occupied by the to-be-hibernated virtual machine may be exported to the Hypervisor by using the device. The Hypervisor compresses and persistently transmits only the running data stored in the valid memory page. When the compressed running data is stored and read, read and write pressure of the storage object is reduced, thereby reducing a hibernation delay and a wakeup delay, and improving hibernation performance. The virtio balloon mentioned in this embodiment of this application is a virtual device, and may be configured to expose a memory use status of a virtual machine to the Hypervisor, and allow the Hypervisor to recognize and release invalid memory of the virtual machine. The virtio balloon is usually applied to scenarios such as acceleration of hot migration and overselling of memory.

Therefore, in a process in which a virtual machine monitor stops scheduling a virtual processor of a to-be-hibernated virtual machine to a physical processor of a first target server for running, to stop running the to-be-hibernated virtual machine, a memory page used for storing running data of the to-be-hibernated virtual machine in memory in the first target server is determined, and the running data stored in the memory page is compressed and then stored into a storage object by the virtual machine monitor, so that a virtual machine can be hibernated without relying on a hibernation capability of an operating system of the virtual machine, thereby ensuring hibernation success rate of the virtual machine and reducing read and write pressure of the storage object, and further reducing a hibernation delay and a wakeup delay and improving hibernation performance.

The running data in this embodiment of this application includes memory data of the virtual machine. If a virtual peripheral such as a graphics processing device (GPU) and an accelerator is further mounted to the virtual machine, in addition to the memory data, the running data further includes device context information of the virtual peripheral such as the graphics processing device (GPU) and the accelerator. Correspondingly, when a corresponding to-be-hibernated virtual machine is woken up, in addition to using memory data to initialize memory of the virtual machine, the second virtual machine monitor further needs to use corresponding device context information to further initialize a virtual peripheral, to ensure consistency between a running state of the virtual machine when the virtual machine is woken up and a running state before hibernation. Therefore, in this embodiment of this application, the memory data and the device context information in the running data need to be transferred from the memory of the first target server to the predetermined storage object 12 by the first virtual machine monitor. Since after wakeup, a server needs to be rescheduled to create a to-be-hibernated virtual machine that needs to be woken up, in this embodiment of this application, to ensure consistency between running states of the virtual machine before hibernation and after wakeup, the running data of the to-be-hibernated virtual machine is persistently stored by using the storage object 12. The storage object 12 is, for example, an object storage object 12, a file storage object, or a cloud disk service, provided that it can be ensured that the running data is stored securely and is not lost. As shown in FIG. 2, the method provided in the embodiments of this application further includes the following steps.

Step S21: send, in response to a wakeup instruction for the to-be-hibernated virtual machine, a creation instruction used for instructing to recreate the to-be-hibernated virtual machine to a second virtual machine monitor of a second target server.

Step S22: the second virtual machine monitor recreates, in response to the creation instruction, the to-be-hibernated virtual machine by using the second target server, to obtain a target virtual machine, and enables, by using the running data read from the storage object 12, the target virtual machine to inherit the running state that is before the running of the to-be-hibernated virtual machine is stopped. Specifically, the second virtual machine monitor writes the running data read from the storage object 12 into memory allocated by the second target server to the target virtual machine, and initializes the memory of the target virtual machine by using the running data (for example, the memory data and/or the device context information), to ensure consistency between running states of the target virtual machine that is woken up and created and the to-be-hibernated virtual machine before hibernation. Therefore, in this embodiment of this application, at a wakeup stage of the virtual machine, a server required for waking up the virtual machine is rescheduled, to ensure that the virtual machine can be successfully woken up.

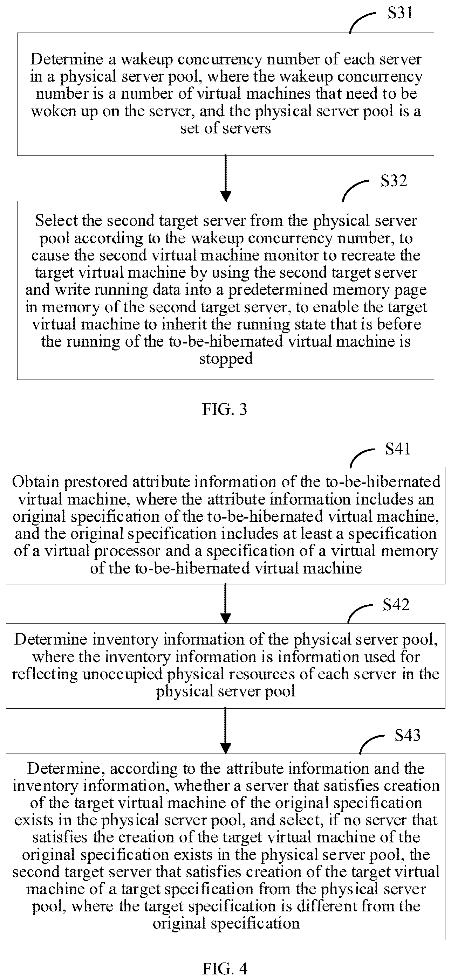

As shown in FIG. 3, in step S22, before the second virtual machine monitor recreates, in response to the creation instruction, the to-be-hibernated virtual machine by using the second target server, to obtain the target virtual machine, the method provided in the embodiments of this application further includes the following steps.

Step S31: determine a wakeup concurrency number of each server in a physical server pool, where the wakeup concurrency number is a number of virtual machines that need to be woken up on the server, and the physical server pool is a set of servers, that is, the physical server pool is configured to provide a server required for generating a virtual machine for a virtual machine monitor.

Step S32: select the second target server from the physical server pool according to the wakeup concurrency number, to cause the second virtual machine monitor to recreate the target virtual machine by using the second target server and write the running data into a predetermined memory page in memory of the second target server, to enable the target virtual machine to inherit the running state that is before the running of the to-be-hibernated virtual machine is stopped. The second target server in this embodiment of this application may be the first target server, or may be a server of another specification, so that the to-be-hibernated virtual machine can be recreated in situ, or may be recreated and woken up on a server of another specification.

Specifically, in this embodiment of this application, the second target server may be selected from the physical server pool through an inventory service 13 according to the wakeup concurrency number. The inventory service 13 tracks unoccupied physical resources of servers in the physical server pool, and when the second virtual machine monitor creates a virtual machine, selects a proper server for the second virtual machine monitor to wake up the to-be-hibernated virtual machine. The unoccupied physical resource of the server is at least used for representing whether a physical resource of the server is a virtual machine, a physical resource remaining status, and the like. The wakeup concurrency number of the second target server is less than the wakeup concurrency number of another server. In this embodiment of this application, by considering wakeup concurrency numbers of servers, a server with a small wakeup concurrency number is selected to wake up the to-be-hibernated virtual machine, thereby reducing a wakeup delay while reducing load of each server.

Therefore, in this embodiment of this application, a server with a small wakeup concurrency number is selected, and the target virtual machine is created by the virtual machine monitor to wake up the virtual machine, so that a wakeup concurrency number of a single server is reduced, thereby reducing a wakeup queuing delay of the single server, computing resources consumed for wakeup, a download delay for obtaining the running data from the storage object 12, and the like.

The method provided in this embodiment of this application further includes: determining, when the running data of the to-be-hibernated virtual machine is transferred by the first virtual machine monitor to the storage object, whether another virtual machine that needs to be woken up exists on the first target server, and transferring, if another virtual machine that needs to be woken up exists on the first target server, the running data of the to-be-hibernated virtual machine to the storage object after writing running data of the another virtual machine into the first target server. In this way, in this embodiment of this application, service rating is performed on operations related to hibernation and wakeup by the first virtual machine monitor. In an actual application, a wakeup delay is more important. Therefore, if a single server has queues of hibernation and wakeup tasks at the same time, that is, when the single server has both running data that needs to be transferred and a write operation on running data required for wakeup, the write operation on the running data required for wakeup is first performed, thereby reducing the wakeup delay and improving user experience.

As shown in FIG. 4, in step S32, before the second virtual machine monitor recreates the target virtual machine by using the second target server, the method provided in the embodiments of this application further includes the following steps.

Step S41: obtain prestored attribute information of the to-be-hibernated virtual machine, where the attribute information includes an original specification of the to-be-hibernated virtual machine, and the original specification includes at least a specification of a virtual processor and a specification of a virtual memory of the to-be-hibernated virtual machine. A specification of a virtual processor is usually distinguished by determining a quantity of cores (that is, a quantity of CPU cores) of a physical processor occupied by the to-be-hibernated virtual machine, and a specification of a virtual memory is distinguished by using a memory size of the to-be-hibernated virtual machine on a corresponding first target server. The original specification may further include specification information such as whether a virtual peripheral is mounted to the to-be-hibernated virtual machine, a model of a physical processor, and the like.

Step S42: determine inventory information of the physical server pool, where the inventory information is information used for reflecting unoccupied physical resources of each server in the physical server pool. The inventory information is managed by the inventory service 13, and the inventory service 13 updates the inventory information in real time according to creation and hibernation destruction of each virtual machine. Whether a physical resource currently possessed by the server has a capability to wake up the to-be-hibernated virtual machine can be determined according to information about the unoccupied physical resource (that is, a physical processor and a memory resource) of the server.

Step S43: determine, according to the attribute information and the inventory information, whether a server that satisfies creation of the target virtual machine of the original specification exists in the physical server pool, and select, if no server that satisfies the creation of the target virtual machine of the original specification exists in the physical server pool, the second target server that satisfies creation of the target virtual machine of a target specification from the physical server pool, where the target specification is different from the original specification.

In this case, in step S32, the step of recreating the target virtual machine by the second virtual machine monitor by using the second target server includes: creating, by the second virtual machine monitor in response to the creation instruction, the target virtual machine of the target specification by using the second target server, and enabling the created target virtual machine to have a virtual processor and a virtual memory that are of same specifications as those of the to-be-hibernated virtual machine. Therefore, in this embodiment of this application, at a wakeup stage, because an insufficient inventory of idle servers in the physical server pool may cause unsuccessful wakeup of the virtual machine, in this embodiment of this application, in addition to rescheduling the target server when the virtual machine is woken up, the virtual machine is further allowed to be hot-configured to another specification through step S41 to step S43, to implement an objective that the to-be-hibernated virtual machine is recreated and woken up on a server of another specification. The virtual machine can be successfully woken up, and only that the target virtual machine has a virtual processor and a memory that are of same specifications as those of the to-be-hibernated virtual machine needs to be ensured. Specifications such as whether a virtual peripheral is mounted and a model of a physical processor do not need to be the same. In this way, by using union pools of different specifications, an inventory capacity of servers in a physical server pool can be greatly improved, and a probability of wakeup failure is reduced.

In this embodiment of this application, the step of writing the running data into the predetermined memory page in the memory of the second target server by the second virtual machine monitor includes: reading, by the second virtual machine monitor, the running data from the storage object 12, and writing, after decompressing the running data, the running data into the predetermined memory page of the second target server. In this embodiment of this application, the running data such as memory data of the to-be-hibernated virtual machine is compressed to reduce a size of stored content, thereby reducing read and write pressure of the storage object 12, and further reducing hibernation and wakeup delays. The running data obtained from the storage object 12 is decompressed to a predetermined memory page in memory of the second target server, to implement a memory initialization operation on the woken target virtual machine, thereby ensuring consistency between running states of the target virtual machine and the to-be-hibernated virtual machine before the target virtual machine is hibernated.

The method provided in this embodiment of this application further includes: storing, by the first virtual machine monitor, running data of a plurality of to-be-hibernated virtual machines to the storage object 12 based on a parallel transmission policy. Then, the running data is written into the predetermined memory page of the second target server by the second virtual machine monitor based on the parallel transmission policy after decompressing running data of a plurality of to-be-hibernated virtual machines read from the storage object 12. Parallel transmission is transmission of a plurality of data bits (which is running data in the embodiments of this application) between the virtual machine monitor and the storage object 12 at the same time. In this way, in the embodiments of this application, a multi-stream parallel transmission policy is adopted by the virtual machine monitor, thereby improving throughput of storage/reading of the running data.

The method provided in this embodiment of this application further includes: allocating a bandwidth resource possessed by the to-be-hibernated virtual machine before the running of the to-be-hibernated virtual machine is stopped to the second virtual machine monitor for usage, to enable the second virtual machine monitor to read the running data from the storage object 12 and/or store the running data to the storage object 12 by using the bandwidth resource. Therefore, in this embodiment of this application, because the second virtual machine monitor needs to consume network/storage bandwidth resources when storing and/or reading the running data, and in a memory storage and/or reading process, the to-be-hibernated virtual machine is in a shutdown state, the second virtual machine monitor may be enabled to reuse all network/storage bandwidth resources allocated by the to-be-hibernated virtual machine, thereby avoiding interference caused by additional resource consumption to hibernation and ensuring success rates of hibernation and wakeup.

The methods provided in this embodiment of this application further includes: releasing, by the first virtual machine monitor, a physical resource occupied by the to-be-hibernated virtual machine on the first target server, and enabling the second virtual machine monitor to compress and/or decompress the running data and read the running data from the storage object 12 and/or store the running data to the storage object 12 by reusing the physical resource. In this embodiment of this application, the first virtual machine monitor releases the physical resources of the to-be-hibernated virtual machine on the first target server, thereby reducing resource consumption costs, and avoid interference caused to hibernation by additional resource consumption, to ensure success rates of hibernation and wakeup.

The method provided in this embodiment of this application further includes: providing a service for the first virtual machine monitor and the second virtual machine monitor through domain-based deployment of the plurality of storage objects 12, where the domain-based deployment is a deployment manner that enables the storage object 12 to store running data of a predetermined number of to-be-hibernated virtual machines. In this embodiment of this application, domain-based deployment is performed on the storage object 12, to reduce docked hibernated/woken virtual machines in a single domain, thereby reducing incast read and write traffic pressure caused when a plurality of virtual machines are concurrently hibernated/woken up. Incast refers to a many-to-one communication mode, and is usually seen in a data center in which a large quantity of distributed storage or calculation services are deployed. In this embodiment of this application, the incast is mainly used for describing read and write traffic pressure of one storage object 12 corresponding to a plurality of virtual machines that are more than a predetermined quantity.

Because the to-be-hibernated virtual machine may buffer cloud disk I/O data in memory when the to-be-hibernated virtual machine is hibernated, to further ensure that the to-be-hibernated virtual machine can be normally woken up, the method provided in this embodiment of this application further includes: storing cloud disk data of a cloud disk originally mounted to the to-be-hibernated virtual machine, to enable the second virtual machine monitor to mount a target cloud disk having the cloud disk data to the target virtual machine after creating the target virtual machine by using the second target server. Methods for storing the cloud disk data of the to-be-hibernated virtual machine include not releasing the cloud disk, snapshotting the cloud disk data and releasing a cloud disk resource, or the like. If the cloud disk data is stored in a manner of not releasing the cloud disk, the target cloud disk mentioned in this embodiment of this application is a cloud disk originally mounted to the to-be-hibernated virtual machine; otherwise, the target cloud disk is another cloud disk for obtaining the cloud disk data of the to-be-hibernated virtual machine.

The second embodiment of this application further provides a hibernation apparatus. The apparatus is configured to perform a hibernation method. For content of the hibernation method, refer to the content provided in the first embodiment of this application. Details are not described herein again in this embodiment of this application.

The third embodiment of this application further provides a hibernation system. The system includes the foregoing hibernation apparatus. For content of the hibernation apparatus, reference please made to the content provided in the first embodiment of this application. Details are not described herein again in this embodiment of this application. The hibernation system provided in this embodiment of this application further includes a storage object 12 and an inventory service 13. After wakeup, a server needs to be rescheduled to create a to-be-hibernated virtual machine that needs to be woken up. To ensure consistency between running states of a virtual machine before hibernation and after wakeup, in this embodiment of this application, running data of the to-be-hibernated virtual machine is persistently stored by using the storage object 12. In this case, when performing a hibernation operation (that is, stopping running) on the to-be-hibernated virtual machine, the hibernation apparatus transfers the running data from memory of a first target server to the predetermined storage object 12 by using a first virtual machine monitor. When waking up the to-be-hibernated virtual machine, a second virtual machine monitor writes again the running data read from the storage object 12 into a predetermined memory page of the second target server required for wakeup. Because the inventory service 13 tracks unoccupied physical resources of servers in a physical server pool, the hibernation apparatus provided in this embodiment of this application responds to a wakeup instruction for the to-be-hibernated virtual machine. After selecting, by invoking the inventory service 13, the second target server required to recreate the to-be-hibernated virtual machine from the physical server pool, the hibernation apparatus sends, to the second virtual machine monitor of the second target server, a creation instruction used for instructing to recreate the to-be-hibernated virtual machine. The hibernation apparatus in this embodiment of this application selects a proper server for a virtual machine monitor to wake up the to-be-hibernated virtual machine when creating the virtual machine in the second virtual machine monitor by using the inventory service 13. Then, in response to the creation instruction, the second virtual machine monitor recreates the to-be-hibernated virtual machine by using the second target server, to obtain a target virtual machine. The second virtual machine monitor writes the running data read from the storage object 12 into a predetermined memory page of the second target server, and initializes the memory of the target virtual machine by using the running data (for example, memory data and/or device context information), to ensure consistency between running states of the target virtual machine that is woken up and created and the to-be-hibernated virtual machine before hibernation.

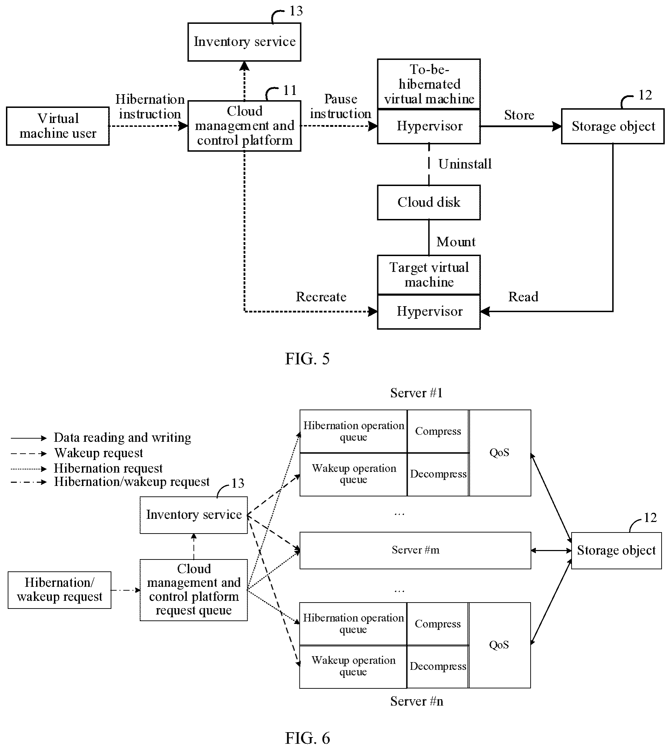

Specifically, as shown in FIG. 5, when the virtual machine monitor is a Hypervisor, and the hibernation apparatus is a cloud management and control platform 11 (where the cloud management and control platform 11 is a platform that provides comprehensive cloud resource provision, operation and maintenance, and operation management capabilities, and has core competitiveness such as integrated management and control, automated operation and maintenance, intelligent analysis, and personalized expansion), when the hibernation system provided in this embodiment of this application performs hibernation of a virtual machine based on the Hypervisor, two procedures are included: a hibernation operation procedure and a wakeup operation procedure, which are described in detail as follows.

Hibernation operation procedure: After a user sends a hibernation instruction, the cloud management and control platform 11 sends a pause instruction "pouse VM" to the first virtual machine monitor Hypervisor of the first target server in which the to-be-hibernated virtual machine is located, instructs the first virtual machine monitor Hypervisor to suspend the to-be-hibernated virtual machine, persistently stores, by using the first virtual machine monitor, the memory data of the to-be-hibernated virtual machine to the storage object 12 after compressing the memory data, and then releases a physical processor CPU and a memory resource occupied on the first target server by the to-be-hibernated virtual machine. The memory data is compressed to reduce a size of stored content and reduce read and write pressure of the storage object 12. The storage object 12 includes an object storage object 12, a file storage object, and a cloud disk service. To ensure that the to-be-hibernated virtual machine can be normally woken up, the cloud management and control platform 11 layer needs to reserve attribute information of the to-be-hibernated virtual machine. The attribute information includes an original specification of the to-be-hibernated virtual machine, a device (such as a network adapter, a cloud disk, or a virtual graphics processing unit vGPU) mounted to the virtual machine, a region/an available region of the virtual machine, and the like. In addition, because cloud disk data may be buffered in memory of the to-be-hibernated virtual machine, the cloud disk data corresponding to the to-be-hibernated virtual machine needs to be reserved, and the cloud disk data and the memory data of the to-be-hibernated virtual machine are in a one-to-one correspondence. Methods for reserving cloud disk data include not releasing a cloud disk, or snapshotting cloud disk data, releasing a cloud disk resource, and the like.

Wakeup operation procedure: After the user sends a wakeup instruction, the cloud management and control platform 11 invokes the inventory service 13 according to the stored attribute information of the virtual machine to select a proper second target server to recreate the to-be-hibernated virtual machine. In addition to considering constraint conditions such as a server inventory and a server specification of the physical server pool, the inventory service 13 further needs to consider a hibernation concurrency number and a wakeup concurrency number on each server for rescheduling a server for recreating, to reduce load of the server and reduce a hibernation/wakeup delay. After the second target server is selected, the cloud management and control platform 11 delivers the creation instruction to the second virtual machine monitor Hypervisor of the second target server to create the target virtual machine. The creation instruction is an instruction used for instructing the second virtual machine monitor Hypervisor to recreate the to-be-hibernated virtual machine. In this case, the second virtual machine monitor Hypervisor reads memory persistence information (that is, memory data stored when hibernation is performed) from the storage object 12, and initializes memory of the target virtual machine by using the read memory data. After mounting the cloud disk again, the second virtual machine monitor Hypervisor starts the target virtual machine, to complete recreating of the to-be-hibernated virtual machine. After the to-be-hibernated virtual machine is recreated and woken up, persistent memory data of the to-be-hibernated virtual machine may be deleted from the storage object 12, thereby reducing read and write pressure of the storage object 12.

A delay is a core index of hibernation/wakeup. As shown in FIG. 6, QoS in FIG. 6 refers to that a network can provide a better service capability for specified network communication by using various basic technologies, is a security mechanism of the network, and is a technology used for resolving problems such as a network delay and congestion. In this embodiment of this application, QoS mainly refers to a method for reducing a hibernation or wakeup delay. Specifically, in this embodiment of this application, the following method is used to reduce the hibernation or wakeup delay of the to-be-hibernated virtual machine.
(1) When a wakeup operation of a to-be-hibernated virtual machine is performed, a server with a relatively small wakeup concurrency number is selected by using an inventory service, to reduce the wakeup concurrency number of a single server, thereby reducing a hibernation/wakeup queuing delay of the single server, computing resources consumed by hibernation/wakeup, upload and download delays of memory data, and the like.
(2) The first virtual monitor Hypervisor performs service rating on the hibernation operation and the wakeup operation. In an actual application, a wakeup delay may be more important. Therefore, if a single server has queues of hibernation and wakeup tasks at the same time, that is, when the single server has both running data that needs to be transferred and a write operation on running data required for wakeup, the write operation on the running data required for wakeup is first performed, thereby reducing the wakeup delay and improving user experience.
(3) In this embodiment of this application, domain-based deployment is further performed on the storage object 12, to reduce a quantity of docked hibernated/woken virtual machines in a single domain, thereby reducing incast read and write traffic pressure caused when a plurality of virtual machines are concurrently hibernated/woken up.
(4) The memory data of the to-be-hibernated virtual machine is compressed in a hibernation operation procedure, to reduce a size of stored content and reduce read and write pressure of the storage object 12.

In this embodiment of this application, a method for optimizing a wakeup success rate is as follows.

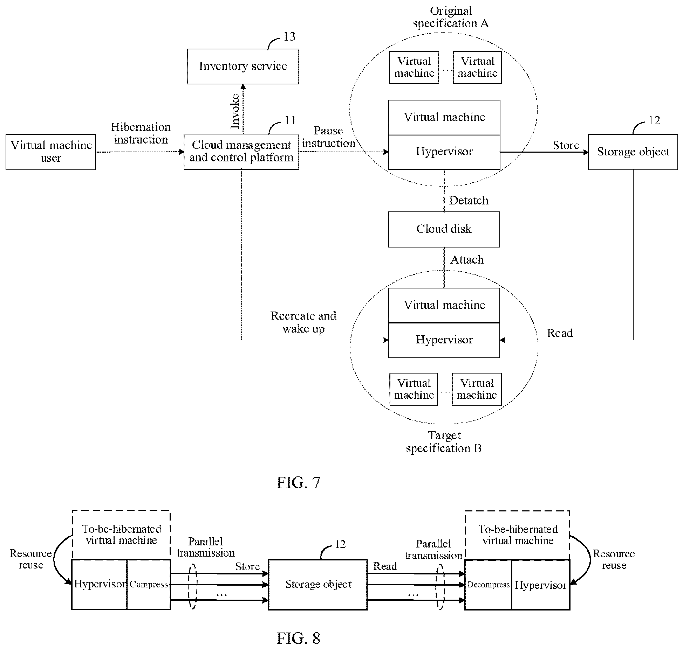

During hibernation, physical resources at a bottom layer of the virtual machine are released, and at a wakeup stage, the virtual machine may be unsuccessfully woken up due to an insufficient server inventory in the physical server pool. To resolve the problem, in this embodiment of this application, the target server is rescheduled to recreate and wake up the virtual machine when wakeup is performed, and the virtual machine of the original specification is allowed to be hot-configured to a virtual machine of the target specification. In this way, by using union pools of different specifications, the inventory capacity of the physical server pool can be greatly improved, and a probability of wakeup failure can be reduced. As shown in FIG. 7, an original specification of the to-be-hibernated virtual machine is A, and at the wakeup stage, because an inventory of a server satisfying creation of the virtual machine of the original specification A is insufficient, the inventory service 13 may select another server compatible with creation of a target virtual machine of a target specification B to perform the wakeup operation. The cloud management and control platform 11 configures a necessary virtual machine instance attribute according to the target server selected by the inventory service 13, and sends a creation command to the second virtual machine monitor Hypervisor, so that the second virtual machine monitor creates the target virtual machine of the target specification B. Generally, the original specification A has a virtual processor and a virtual memory that are of same specifications as those of a target specification B, and specifications such as whether a virtual peripheral is mounted and a model of a physical processor do not need to be the same, so that wakeup of the virtual machine is performed by using union pools of different specifications.

For high-concurrency hibernation/wakeup of to-be-hibernated virtual machines, the server needs to reserve sufficient resources for the second virtual machine monitor Hypervisor to quickly store/read the memory data, and avoid calculation or I/O performance interference to another virtual machine on the same server. In this case, in this embodiment of this application, a method for compressing memory data is used to reduce a data transmission amount, that is, exchanging a computing resource for a network resource. Moreover, as shown in FIG. 8, a multi-stream parallel transmission policy is adopted for network transmission, to improve throughput of memory data storage/reading as much as possible.

In addition, in this embodiment of this application, resources of the to-be-hibernated virtual machine that is already hibernated can be reused, to avoid interference caused by additional resource consumption. In this case, when the second virtual machine monitor Hypervisor stores/reads the memory data, a specific network bandwidth needs to be consumed. In a memory storage/reading process, the to-be-hibernated virtual machine is in the shutdown state. Therefore, the second virtual machine monitor may reuse all network/storage bandwidth resources allocated to the to-be-hibernated virtual machine. When the second virtual machine monitor Hypervisor compresses and/or decompresses the memory data, and stores and/or reads the memory data, specific physical resources are needed. Because in the wakeup operation procedure, the to-be-hibernated virtual machine is in the shutdown state, the second virtual machine monitor may reuse all physical processor CPU resources and a part of memory resources of the to-be-hibernated virtual machine, to compress and/or decompress the memory data, and store and/or read the memory data.

In this embodiment of this application, the process of waking up the to-be-hibernated virtual machine is actually a process of creating a new target virtual machine. In this embodiment of this application, the target virtual machine integrates all physical attributes, memory data, and cloud disk data of a source virtual machine (namely, the to-be-hibernated virtual machine before hibernation). Therefore, the target virtual machine does not need to correct any information, and can run in a state before the hibernation. However, the virtual machine being shut down for a long time causes expiration of a network state, and inconsistency between time of the target virtual machine and time of the to-be-hibernated virtual machine before the hibernation (that is, a clock is incorrect or unsynchronized). In this embodiment of this application, the network relies on self-recovery of an application. For example, an expired TCP connection needs to be reconnected. For time correction, a time synchronization service (for example, an NTP service) built in the target virtual machine is used to compulsorily synchronize clocks, to ensure time consistency.

Content of the foregoing hibernation operation procedure in this application considers only a network/storage peripheral, and therefore, only the memory data is persistent. In practice, another virtual peripheral may be further mounted to the to-be-hibernated virtual machine. Therefore, when the target virtual machine is recreated, the virtual peripheral further needs to be recreated. The virtual peripheral is, for example, a graphics processing device GPU or an accelerator. In this scenario, in addition to persisting the memory data, device context information of the virtual peripheral further needs to be persisted. That is, the first virtual machine monitor also needs to store the device context information into the storage object 12. Correspondingly, when wakeup of the to-be-hibernated virtual machine is performed, in addition to using the persistent memory data to initialize memory, the second virtual machine monitor Hypervisor further needs to use device context information read from the storage object 12 to further initialize the virtual peripheral, to ensure consistency between running states of a current virtual machine and the source virtual machine when the to-be-hibernated virtual machine is woken up.

It can be learned that the hibernation system based on the Hypervisor provided in this embodiment of this application has advantages such as high concurrency, a low delay, and a high wakeup success rate, and is suitable for large-scale deployment on a cloud.

A fourth embodiment of this application further provides an electronic device, including: a processor and a memory storing a program. The program includes instructions. The instructions, when executed by the processor, enable the processor to perform the foregoing hibernation method. For details of the hibernation method, refer to content provided in the first embodiment of this application. Details are not described herein again in this embodiment of this application.

A fifth embodiment of this application further provides a non-transitory machine-readable medium storing computer instructions. The computer instructions are used for enabling a computer to perform the foregoing hibernation method. For details of the hibernation method, refer to the content provided in the first embodiment of this application. Details are not described herein again in this embodiment of this application.

A sixth embodiment of this application further provides a computer program product, including a computer program. The computer program, when executed by a processor of a computer, is configured to enable the computer to perform the foregoing hibernation method. For details of the hibernation method, refer to the content provided in the first embodiment of this application. Details are not described herein again in this embodiment of this application.

The computer program used for implementing the method in the embodiments of this application may be written in any combination of one or more programming languages. These computer programs may be provided for a general-purpose computer, a special-purpose computer, or a processor or a controller of another programmable data processing apparatus, so that the computer program, when executed by the processor or the controller, enables the functions/operations specified in the flowchart and/or the block diagram to be implemented. The computer program may be completely executed on a machine or partially executed on a machine, or may be used as an independent software package, to be partially executed on a machine and partially executed on a remote machine, or completely executed on a remote machine or a server.

In context of the embodiments of this application, the machine-readable medium may be a tangible medium that includes or stores a program for use by or in combination with an instruction execution system, apparatus, or device. The machine-readable medium may be a machine-readable signal medium or a machine-readable storage medium. The machine-readable signal medium may include, but is not limited to, an electronic, magnetic, optical, electromagnetic, infrared, or semiconductor system, apparatus, or device, or any suitable combination thereof. More specific examples of the machine-readable storage medium include electrical connection based on one or more wires, a portable computer disk, a hard drive, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination thereof.

It should be noted that the term "include" and variants thereof used in the embodiments of this application are open inclusion, that is, "include but not limited to". The term "based on" is "at least partially based on". The term "an embodiment" represents "at least one embodiment". The term "another embodiment" represents "at least one another embodiment". The term "some embodiments" represents "at least some embodiments". Modifications such as "one" and "a plurality of" mentioned in the embodiments of this application are illustrative rather than restrictive. A person skilled in the art should understand that, unless otherwise clearly indicated in the context, the modifications should be understood as "one or more".

User information (including, but not limited to, user equipment information, user personal information, and the like) and data (including, but not limited to, data for analysis, stored data, displayed data, and the like) involved in the embodiments of this application are all information and data that are authorized by a user or that are fully authorized by all parties, and related data needs to be collected, used, and processed by complying with relevant laws, regulations, and standards of relevant countries and regions. In addition, a corresponding operation entry is provided for the user to select to authorize or reject.

The steps described in the method implementations in the embodiments of this application may be performed in different orders, and/or performed in parallel. In addition, the method implementations may include an additional step and/or omit a step that is performed and shown. The protection scope of this application is not limited in this aspect.

"Embodiment" mentioned in this specific means that specific features, structures, or characteristics described with reference to the embodiment may be included in at least one embodiment of this application. Appearances of the term in various locations in the specification are not necessarily referring to a same embodiment, nor are separate or alternative embodiments mutually exclusive of another embodiment. The embodiments of this specification are all described in a related manner. For same or similar parts in the embodiments, mutual reference may be made. Especially, apparatus, device, and system embodiments are basically similar to the method embodiments, and therefore, are described briefly. For related parts, refer to partial descriptions in the method embodiments.

The foregoing embodiments only describe several implementations of this application, which are described specifically and in detail, but cannot be construed as a limitation to the patent protection scope. It should be noted that for a person of ordinary skill in the art, several variations and improvements can be made without departing from the idea of this application. The variations and improvements all belong to the protection scope of this application. Therefore, the protection scope of this application is subject to the appended claims.

## Claims

1. A hibernation method, comprising:
determining, when running of a to-be-hibernated virtual machine is stopped by a first virtual machine monitor of a first target server in which the to-be-hibernated virtual machine is located, a memory page used for storing running data of the to-be-hibernated virtual machine in memory of the to-be-hibernated virtual machine in the first target server; and
transferring the running data to a predetermined storage object after the running data stored in the memory page is compressed by the first virtual machine monitor, so that when the to-be-hibernated virtual machine is woken up, the woken to-be-hibernated virtual machine inherits, by using the running data read from the storage object, a running state that is before the running of the to-be-hibernated virtual machine is stopped.

2. The method according to claim 1, further comprising:
sending, in response to a wakeup instruction for the to-be-hibernated virtual machine, a creation instruction used for instructing to recreate the to-be-hibernated virtual machine to a second virtual machine monitor of a second target server; and
recreating, by the second virtual machine monitor in response to the creation instruction, the to-be-hibernated virtual machine by using the second target server, to obtain a target virtual machine, and enabling, by using the running data read from the storage object, the target virtual machine to inherit the running state that is before the running of the to-be-hibernated virtual machine is stopped.

3. The method according to claim 2, wherein before the recreating, by the second virtual machine monitor in response to the creation instruction, the to-be-hibernated virtual machine by using the second target server, to obtain the target virtual machine, the method further comprises:
determining a wakeup concurrency number of each server in a physical server pool, wherein the wakeup concurrency number is a number of virtual machines that need to be woken up on the server, and the physical server pool is a set of servers; and
selecting the second target server from the physical server pool according to the wakeup concurrency number, to cause the second virtual machine monitor to recreate the target virtual machine by using the second target server and write the running data into a predetermined memory page in memory of the second target server, to enable the target virtual machine to inherit the running state that is before the running of the to-be-hibernated virtual machine is stopped.

4. The method according to claim 3, wherein the wakeup concurrency number of the second target server is less than the wakeup concurrency number of another server.

5. The method according to claim 3, further comprising:
determining, when the running data of the to-be-hibernated virtual machine is transferred by the first virtual machine monitor to the storage object, whether another virtual machine that needs to be woken up exists on the first target server, and transferring, if another virtual machine that needs to be woken up exists on the first target server, the running data of the to-be-hibernated virtual machine to the storage object after writing running data of the another virtual machine into the first target server.

6. The method according to any one of claims 3 to 5, wherein before the second virtual machine monitor recreates the target virtual machine by using the second target server, the method further comprises:
obtaining prestored attribute information of the to-be-hibernated virtual machine, wherein the attribute information comprises an original specification of the to-be-hibernated virtual machine, and the original specification comprises at least a specification of a virtual processor and a specification of a virtual memory of the to-be-hibernated virtual machine;
determining inventory information of the physical server pool, wherein the inventory information is information used for reflecting unoccupied physical resources of each server in the physical server pool; and
determining, according to the attribute information and the inventory information, whether a server that satisfies creation of the target virtual machine of the original specification exists in the physical server pool, and selecting, if no server that satisfies the creation of the target virtual machine of the original specification exists in the physical server pool, the second target server that satisfies creation of the target virtual machine of a target specification from the physical server pool, wherein the target specification is different from the original specification; and
the step of recreating the target virtual machine by the second virtual machine monitor by using the second target server comprises:
creating, by the second virtual machine monitor in response to the creation instruction, the target virtual machine of the target specification by using the second target server, and enabling the created target virtual machine to have a virtual processor and a virtual memory that are of same specifications as those of the to-be-hibernated virtual machine.

7. The method according to claim 3, wherein the step of writing the running data into the predetermined memory page in the memory of the second target server by the second virtual machine monitor comprises:
reading, by the second virtual machine monitor, the running data from the storage object, and writing, after decompressing the running data, the running data into the predetermined memory page of the second target server.

8. The method according to claim 7, further comprising:
storing, by the first virtual machine monitor, running data of a plurality of to-be-hibernated virtual machines to the storage object based on a parallel transmission policy; and/or writing, by the second virtual machine monitor based on the parallel transmission policy, the running data into the predetermined memory page of the second target server after decompressing running data of a plurality of to-be-hibernated virtual machines read from the storage object.

9. The method according to claim 8, further comprising:
allocating a bandwidth resource possessed by the to-be-hibernated virtual machine before the running of the to-be-hibernated virtual machine is stopped to the second virtual machine monitor for usage, to enable the second virtual machine monitor to read the running data from the storage object and/or store the running data to the storage object by using the bandwidth resource.

10. The method according to claim 6, further comprising:
releasing, by the first virtual machine monitor, a physical resource occupied by the to-be-hibernated virtual machine on the first target server, and enabling the second virtual machine monitor to compress and/or decompress the running data and read the running data from the storage object and/or store the running data to the storage object by reusing the physical resource.

11. The method according to any one of claims 7 to 10, further comprising:
providing a service for the first virtual machine monitor and the second virtual machine monitor through domain-based deployment of a plurality of storage objects, wherein the domain-based deployment is a deployment manner that enables the storage object to store running data of a predetermined number of to-be-hibernated virtual machines.

12. The method according to claim 3, further comprising:
storing cloud disk data of a cloud disk originally mounted to the to-be-hibernated virtual machine, to enable the second virtual machine monitor to mount a target cloud disk having the cloud disk data to the target virtual machine after creating the target virtual machine by using the second target server.

13. A hibernation apparatus, configured to perform the hibernation method according to any one of claims 1 to 12.

14. A hibernation system, comprising the hibernation apparatus according to claim 13.

15. An electronic device, comprising: a processor, and a memory storing a program, wherein the program comprises instructions, and the instructions, when executed by the processor, enable the processor to perform the method according to any one of claims 1 to 12.

16. A non-transitory machine-readable medium storing computer instructions, wherein the computer instructions are used for enabling a computer to perform the method according to any one of claims 1 to 12.
